# EUROPEAN PATENT SPECIFICATION

(11) **EP 3 731 155 B1**
(45) Date of publication and mention of the grant of the patent: **17.09.2025**
(21) Application number: 19171036.7
(22) Date of filing: 25.04.2019
(51) Int. Cl.: G06N 5/02, G06N 20/00, G06N 3/04, G06N 7/00

(54) **APPARATUS AND METHOD FOR DRIVE SELECTION USING MACHINE LEARNING**
VORRICHTUNG UND VERFAHREN ZUR ANTRIEBSAUSWAHL UNTER VERWENDUNG VON MASCHINENLERNEN
APPAREIL ET PROCÉDÉ DE SÉLECTION D'ENTRAÎNEMENT À L'AIDE D'APPRENTISSAGE MACHINE

(43) Date of publication of application: 28.10.2020
(73) Proprietor: ABB Schweiz AG, 5400 Baden (CH)
(72) Inventor: Rodriguez, Pablo, 68549 Ilvesheim (DE); Doppelhamer, Jens, 68526 Ladenburg (DE); Stark, Katharina, 69469 Weinheim (DE); Bihani, Prerna, 69121 Heidelberg (DE)
(74) Representative: Maiwald GmbH

(56) References cited:
- WO-A1-2019/040076
- US-A1- 2007 106 785

## Description

### Field of the invention

The invention generally relates to industrial drive systems and/or a selection of a component thereof. Particularly, the invention relates to a computer-implemented method of training an artificial intelligence module for selecting at least one component of an industrial drive system. Further, the invention relates to a use of an artificial intelligence module trained according to such method and to an apparatus trained according to such method for selecting at least one component of an industrial drive system.

### Technical background

Industrial drive systems usually comprise a plurality of components, which can be selected during a design phase of the system, such that the selected components and/or the drive system meet certain requirements for the intended use and/or application of the system. In order to configure an industrial drive system, knowledge from multiple phases of engineering such as system design, simulation engineering, and operation of similar drive systems may be used. Also, expert knowledge of a human expert, e.g. honed with practical experience, may be used for the selection of components of the drive system. For example, WO 2019/040076 A1 describes a computer-implemented method for generating a deployment for an automated system.

Due to the multiple sources of knowledge and/or data that may be involved in selecting components of industrial drive systems, the process of drive selection is rather complex, time consuming and costly. Currently, there is no method, apparatus or tool available that allows for an integration of the various sources of knowledge and/or data involved in the process of drive selection, i.e. the process of selecting one or more components of the drive system. As a result, an initial design of a drive system is typically based on partial knowledge and is iteratively adjusted, e.g. with simulations, to achieve a suitable drive selection that preferably meets the requirements and/or demands for the intended use and/or application of the drive system.

### Summary of the invention

Generally, it may be desirable to reduce design time, engineering time and/or costs required for the selection of components of industrial drive systems, i.e. for drive selection. Apart from that, it may be desirable to ensure a proper and/or appropriate dimensioning of drive systems according to the specific needs and/or requirements for the intended use and/or application of the drive system.

This may be achieved with the subject matter of the independent claims. Further advantageous embodiments are described in the dependent claims and the following description.

A first aspect of the present disclosure relates to a method of training an artificial intelligence module, hereinafter referred to as AI module, for selecting and/or determining at least one component of an industrial drive system. A second aspect of the present disclosure relates to a use of an AI module trained according to such method for selecting at least one component of an industrial drive system. A third aspect of the present disclosure relates to an apparatus trained according to such method, the apparatus being configured for selecting at least one component of an industrial drive system. It should be noted that any feature, step and/or element described in the following with respect to the method equally applies to the use of the AI module and/or the apparatus, and vice versa. In other words, any feature, step and/or element described hereinafter with reference to any of the first to third aspect equally applies to any other aspect.

According to the first aspect of the disclosure, there is provided a computer-implemented method of training an AI module for selecting and/or determining at least one component of an industrial drive system. The method comprises the step of providing, on a data storage, an initial training data set comprising a set of rules, wherein each rule is indicative of and/or defines a selection decision for selecting and/or determining at least one component of the industrial drive system based on at least one usage requirement for the drive system and/or the at least one component. Therein, the initial training data set may e.g. be retrieved and/or collected from the data storage. Further, the method comprises the step of generating a modified training data set based on supplementing the initial training data set with at least one further selection decision for selecting and/or determining the at least one component and/or a further component of the drive system based on at least one of simulation data relating to a simulation of at least a part of the drive system, empiric data relating to a selection of the at least one component and/or at least one further component of the drive system, and operational data indicative of at least one operational characteristic of at least one installed drive system. Further, the method comprises the step of training the AI module based on and/or using the modified training data set. The industrial drive system is to operate with the selected at least one component.

Generally, by using the initial training data set and supplementing this training data set to generate the modified training data set, knowledge, data, information and/or input from various sources, such as the rule set, the simulation data, the empiric data and/or the operational data can be advantageously combined. This, in turn, may allow for an appropriate and/or proper selection of the at least one component of the drive system according to and/or taking into account the at least one usage requirement by using the AI module trained according to the method. Further, it is ensured that the at least one component and/or the drive system is properly dimensioned, for example in terms of a size, a throughput, an electrical power or the like. Generally, proper dimensioning is desirable for customers, as over-dimensioning may have a negative impact on the total cost of the drive system, the ownership thereof and/or the operation thereof, whereas under-dimensioning may have a negative impact on the productivity of the drive system. Accordingly, based on the invention, it is ensured that the final drive system meets the demands and/or needs required for operation thereof, without e.g. over-dimensioning and/or under-dimensioning the drive system or a part thereof. Moreover, by means of the present invention a design time, engineering time, engineering effort and/or costs involved in the process of drive selection and/or in the process of selecting components for the drive system may be reduced.

By way of example, the at least one component of the industrial drive system can be at least one of a drive, a motor, a load, a transformer, a gearbox, a pump, a ventilation device, a heating device, an air conditioning device, a controller, a motion control, a machinery of the drive system or any other part or component of the drive system. The at least one component of the industrial drive system can be any component which can be exchanged, adjusted, and/or modified within an industrial drive system.

Generally, supplementing the initial training data set may comprise and/or may refer to augmenting and/or complementing the initial training data set with one or more of the simulation data, the empiric data, and the operational data. Further, supplementing the initial training data set may comprise combining and/or merging the initial training data set with one or more of the simulation data, the empiric data and the operational data. It should be noted, however, that also other data relating to drive selection can be used to supplement the initial training data set.

In the context of the present disclosure, a rule of the rule set may represent and/or define a selection decision for selecting the at least one component of the drive system in accordance with the at least one usage requirement. Alternatively or additionally, the selection decision may associate and/or link the at least one component with the at least one usage requirement. For instance, a selection decision and/or a rule may be indicative of a component that is to be selected such that the at least one usage requirement is fulfilled.

Further, the usage requirement may be indicative and/or representative of a demand, requirement, need and/or constraint that should be fulfilled by the industrial drive system and/or the at least one component. Accordingly, the at least one usage requirement may be indicative of and/or may describe an intended use and/or an application of the drive system. By way of example, the at least one usage requirement for the drive system can be indicative of a specification of at least one of a drive, a motor, a load, a transformer, a gearbox, a pump, a ventilation device, a heating device, an air conditioning device, a controller, a motion control, and a machinery of the drive system. Therein, one or more of such specifications and/or usage requirements should be fulfilled in order to ensure that the drive system is suitable for the intended use and/or application thereof.

Analogue to the selection decision, the at least one further selection decision may associate and/or link the at least one component and/or a further component with the at least one usage requirement. For instance, the further selection decision may be indicative of a component that is to be selected such that the at least one usage requirement is fulfilled. Optionally, the further selection decision may be derived from and/or determined based on at least one of the simulation data, the empiric data, and the operational data in order to supplement the initial training data set. Accordingly, the step of supplementing the initial training data set may comprise deriving the further selection decision from at least one of the simulation data, the empiric data, and the operational data.

In the context of the present disclosure, the simulation data may, for instance, comprise one or more simulation results of one or more simulations and/or simulation calculations, e.g. simulating an aspect and/or a part of the at least one component, one or more further components and/or one or more drive systems. For example, a thermal aspect, a thermal property, an electrical aspect, an electrical property, a mechanical aspect, a mechanical property or the like can be simulated for one or more components of one or more drive systems (and/or for one or more drive systems) and the corresponding simulation results can be comprised in the simulation data. Accordingly, the simulation data can be obtained during engineering and testing and/or can include simulation results of electrical, thermal and/or mechanical aspects or properties of the systems.

Further, in the context of the present disclosure the empiric data can, for example, relate to data of at least one selection and/or selection decision made by an expert or human expert. Accordingly, the empiric data may comprise and/or may be indicative of e.g. one or more selection decisions for selecting one or more components of a drive system by a human expert.

Therein, the one or more selections and/or selection decisions comprised in the empiric data may be based on e.g. experience of the human expert (or a plurality of experts) and/or e.g. gained from simulation calculations performed by the human expert(s).

Further, the operational data (and/or the operational characteristic) may refer to any data, which can be acquired during operation of one or more installed industrial drive systems. Therein, the operational data may be gained, collected and/or gathered from a currently running system and/or a system run in the past. By way of example, the operational data may comprise sensor data indicative of one or more measurements with one or more sensors of an installed drive system, protocol data indicative of an operational history of an installed drive system, disturbance data indicative of a disturbance and/or malfunction of an installed drive system (e.g. an observed anomaly during operation), and/or maintenance data (and/or service date) indicative of a maintenance procedure of an installed drive system. Alternatively or additionally, the operational data may comprise alarm data indicative of an alarm triggered in the installed drive system, event data indicative of any event that occurred during operation of the installed drive system and/or operator data indicative of an operator action performed on the installed drive system.

Generally, the AI module may refer to a classifier and/or classifier circuitry configured to provide a classification result based on one or more inputs, such as one or more usage requirements. Therein, the AI module according to the present disclosure may refer to any type of artificial intelligence device and/or circuitry, e.g. employing and/or running one or more machine learning algorithms on one or more processors and/or data processing devices. Such machine learning algorithm and/or the AI module may be based e.g. on logistic regression, a support vector method, boosting, a naïve Bayes method, a Bayesian network, a k-Nearest Neighbors algorithm, an artificial neural network, a convolutional neural network or the like. Accordingly, the step of training the AI module may comprise utilizing at least one machine learning algorithm for processing the initial training data set and/or the modified training data set, e.g. in order to adjust one or more weights of the AI module. Alternatively or additionally the training may be based on supervised learning, semi-supervised learning, unsupervised learning, deep learning, and/or reinforcement learning. With the help of the machine learning, the AI module is trained in order to be able to provide, as an output, at least one component of the industrial system based on at least one usage requirement, that is provided to the trained AI module as an input.

The invention can be considered as being based on the following findings and insights. For a successful design of an industrial drive system it may be desirable to know the details of the application and/or intended use of the drive system, for instance heating, ventilation, air conditioning, water pumping, machinery, motion control and the like. Based on the application details it may be possible to select components and/or devices as well as to properly dimension the drive system. In conventional approaches for drive selection, a deterministic selection of the components of the system may optionally be validated, e.g. with simulations, before the drive system is assembled. Such approach, however, is rather time consuming, costly and also error prone as only limited data can be taken into account during drive selection. Further, proper dimensioning, which can be important for the customers, may only be hardly achievable in conventional approaches. Over-dimensioning may have a negative impact on the total cost of ownership while under-dimensioning may have a negative impact on the productivity of the system.

By using, as suggested by the present invention, the initial training data set with the rule set and supplementing this initial training data set with one or more of the simulation data, the empiric data and the operational data, the AI module can be trained such that the selection process for selecting components of the drive system can be significantly improved by using the trained AI module, an apparatus and/or a tool, in which the trained AI module is comprised. Accordingly, by means of the present invention, an AI module, an apparatus and/or a tool for making component selections for industrial drive systems can be provided based on knowledge and/or data from various sources. Also, basically an arbitrary amount of data, e.g. comprised in the simulation data, the empiric data, and the operational data, can be taken into account. Particularly, the AI module, apparatus and/or tool can learn from experience embodied in existing expert systems, e.g. based on the initial training data set and/or the rule set, which can be supplemented by knowledge of human experts, e.g. based on the empiric data, by data gained from simulations, e.g. based on the simulation data, and/or by data gained from installed systems, e.g. based on the operational data. Therein, the trained AI module, the apparatus and/or the tool can be continually updated with new experience and/or data gained from the various sources. When using the trained AI module, the apparatus and/or the tool, a user can, for example, describe as an input his application and/or one or more usage requirements, such as e.g. a motor load, an ambient condition, an electrical network parameter and the like. The trained AI module, the apparatus and/or the tool can then present the user one or more recommended engineering decisions in the form of one or more recommended (or selected) components of the drive system, such as e.g. a drive and motor selection. Generally, this allows to provide an optimum component selection for the user based on the one or more usage requirements at reduced costs and efforts.

Numerous further advantages can be provided by the present invention, as summarized in the following. An AI module, apparatus and/or tool for making engineering decisions based on data collected from various sources can be provided, wherein the task of making the decisions can be learned based on the data, without being explicitly programmed. The AI module, apparatus and/or tool can also improve with more data becoming available over time. Also, data from various sources can be used to create a model for industrial engineering decisions. Further, easy to obtain training data samples, data elements and/or rules, e.g. from existing expert systems, may be used to generate the initial training data set. The initial training data set can be continuously updated with new data from other sources, particularly the simulation data, the empiric data, and the operational data. Further, data from the different sources may be weighted accordingly in the creation and updating of the initial training data set, as will be described in more detail hereinafter. Apart from that, active learning techniques may be used to request more expensive training data from e.g. computationally expensive simulation experiments. Also, supervised learning and appropriate learners can be used to create a model for drive system component selection from the modified training data set. Further, engineering data collected over the whole lifecycle of a drive system installation can be collected and used to supplement the initial training data set.

According to an embodiment, the step of providing the initial training data set further comprises generating the initial training data set using a software tool for deterministically selecting one or more components of the drive system based on one or more usage requirements for the drive system. The software tool may e.g. refer to an expert system that may be used to deterministically select and/or determine a component of the drive system and provide a corresponding output, e.g. in the form of a selection decision, based on one or more usage requirements that may be used as inputs for the software tool. Therein, the software tool may comprise a database with a plurality of components and/or a corresponding component specification for each component stored therein. The software tool may employ the rule set, and the step of providing the initial training data set may comprise deriving the initial training data set and/or the rule set from the software tool. Optionally the initial training data set derived from the software tool may be stored on the data storage. Using the software tool a large initial training data set covering multiple conceivable drive systems with arbitrary components can be generated at a minimum effort and/or in short time. In turn, this allows to significantly improve the method of training the AI and a quality of the selection of a component using the trained AI module.

According to an embodiment, each rule of the rule set of the initial training data set comprises at least one pair of data entries with a first data element indicative of the at least one usage requirement and a second data element indicative of the at least one component of the drive system fulfilling the at least one usage requirement. Accordingly, the pair of data entries can describe and/or represent a selection decision associating the at least one usage requirement and/or the first data element with the at least one component and/or the second data element. For example, the first data element can be a power of a motor and the second data element can be a specific motor providing said power.

According to an embodiment, the method further comprises the step of weighting the at least one further selection decision for selecting the at least one component of the drive system relative to one or more rules of the set of rules of the initial training data set. Therein, weighting may comprise applying a weight and/or weight factor to the at least one further selection decision. By weighting the at least one further selection decision a prioritization of the one or more rules and the further selection decision that is based on the simulation data, the empiric data and/or the operational data can be made. Optionally, also the rules can be weighted relative to each other.

According to an embodiment, the method further comprises the step of weighting at least a part of the simulation data, the empiric data and the operational data with at least partly differing weights. Therein, weighting may comprise applying a weight and/or weight factor to at least a part of the simulation data, the empiric data and the operational data. By weighting at least a part of the simulation data, the empiric data and the operational data, an importance, hierarchy and/or prioritization between the simulation data, the empiric data and the operational data can be implemented. By way of example, empiric data relating to expert decisions can be considered as more reliable than e.g. simulation data, which can be taken into account by using a greater weight for the empiric data than for the simulation data. Overall, the weighting may increase a flexibility of the method to account for a different importance and/or reliability of at least a part of the simulation data, the empiric data and the operational data.

According to an embodiment, the step of supplementing the initial training data set further comprises adjusting, altering, updating, modifying and/or correcting at least one rule of the rule set of the initial training data set based on the at least one further selection decision. Alternative or additionally the step of supplementing comprises adjusting, altering, updating, modifying and/or correcting at least one rule of the rule set of the initial training data set based on at least one of the simulation data, the empiric data, and the operational data. Generally, this allows to improve quality of the modified training data set, because e.g. an inappropriate rule of the rule set can be modified, augmented and/or corrected based on one or more of the simulation data, the empiric data and the operational data. In turn, this allows to improve a quality of the selection of components of the drive system when using the trained AI module.

According to an embodiment, the step of supplementing the initial training data set comprises replacing and/or removing at least one rule of the rule set of the initial training data set based on the at least one further selection decision and/or based on at least one of the simulation data, the empiric data, and the operational data. Also by replacing and/or removing at least one rule, a quality of the modified training data set and a quality of the selection of components of the drive system when using the trained AI module can be improved.

According to an embodiment, the step of supplementing further comprises deriving the at least one further selection decision from at least one of the simulation data, the empiric data, and the operational data. Therein, the further selection decision can be derived from any of the simulation data, the empiric data and the operational data. Alternatively or additionally, the further selection decision can be derived from a combination of at least some of the simulation data, the empiric data and the operational data in order to supplement the initial training data set.

According to an embodiment, the operational data comprise at least one of maintenance data indicative of a maintenance procedure performed on the at least one installed drive system, service data indicative of a service procedure performed on the at least one installed drive system, sensor data of at least one senor of the at least one installed drive system, disturbance data indicative of a disturbance of the at least one installed drive system, time series data indicative of a temporal development of the at least one installed drive system, and operator data indicative of at least one operator action performed on the at least one installed drive system. Therein, the disturbance data may comprise alarm data, event data or the like. By way of example, the operational data may indicate, e.g. due to sensor data or disturbance data, that a malfunction occurred in an installed drive system.

Based on such information, the further selection decision may be determined, which may e.g. indicate that a specific component should be used to avoid such malfunction. The further selection decision can then be used to supplement the rule set, such that the further selection decision is taken into account in the drive selection process of a drive system that is to be designed. Accordingly, based on the operational data, the initial training data set can be significantly augmented and/or improved.

According to an embodiment, the step of supplementing the initial training data set further comprises identifying an inappropriate selection decision for selecting the at least one component of the drive system based on at least one of the simulation data, the empiric data, and the operational data; and selecting the at least one further selection decision taking into account the identified inappropriate selection decision. Therein, the inappropriate selection decision may e.g. be comprised in and/or defined by one or more rules of the rule set. For example, a rule of the initial training data set may indicate that a first component should be used for the drive system. One or more of the simulation data, the empiric data and the operational data, however, may indicate that this first component and/or the selection decision associated therewith is inappropriate for the drive system. In response to determining that the first component and/or the selection decision associated therewith is inappropriate, the further selection decision may be determined which may suggest using a second component for the drive system different from the first component. This allows to significantly improve a quality of the modified training data set and a quality of the selection of components of the drive system when using the trained AI module, e.g. allowing to determine an optimum drive system meeting specific customer needs. The optimum drive system may be properly dimensioned according to the customer's needs and/or according to one or more corresponding usage requirements describing the customer's needs.

According to an embodiment, the method further comprises the step of generating the simulation data to supplement the initial training data set. This allows to update and/or supplement the initial training data set, e.g. on demand or continuously.

A second aspect of the present disclosure relates to a use of an AI module trained according to the method, as described hereinabove and hereinbelow, for selecting at least one component of an industrial drive system.

A third aspect of the present disclosure relates to an apparatus for selecting at least one component of an industrial drive system. The apparatus comprises an AI module, wherein the AI module is trained according to the method, as described hereinabove and hereinbelow.

According to an embodiment, the apparatus comprises a user interface configured to receive a user input specifying at least one usage requirement of the industrial drive system. Furthermore, the AI module is configured to select the at least one component of the industrial drive system based on the at least one usage requirement. Further, the AI module and/or the apparatus may be configured to output the at least one component of the industrial drive system, e.g. via the user interface.

Features, functions and/or elements of the apparatus, as described hereinabove and hereinbelow, can be features, functions, elements and/or steps of the method, as described hereinabove and hereinbelow, and vice versa.

Another aspect of the present disclosure relates to a program element, which when executed on a processing unit and/or a processor of a computing device, instructs the computing device to perform steps of the method as described hereinabove and hereinbelow. Therein, the computing device may refer to and/or may be part of the apparatus.

Another aspect of the present disclosure relates to a computer readable medium on which a program element is stored, which, when executed on a processing unit and/or a processor of a computing device, instructs the computing device to perform steps of the method as described hereinabove and hereinbelow.

These and other aspects of the invention will be apparent from and elucidated with reference to the embodiments described hereinafter.

### Short description of the figures

The subject-matter of the invention will be explained in more detail in the following with reference to exemplary embodiments which are illustrated in the attached drawings, wherein:
Fig. 1 shows an apparatus for selecting at least one component of an industrial drive system according to an exemplary embodiment;
Fig. 2 shows a flow chart illustrating steps of a method of training an artificial intelligence module according to an exemplary embodiment;
Fig. 3 shows a flow chart illustrating steps of a method of training an artificial intelligence module according to an exemplary embodiment.

The figures are only schematic and not true to scale. In principle, identical or like parts are provided with identical or like reference symbols in the figures.

### Detailed description of exemplary embodiments

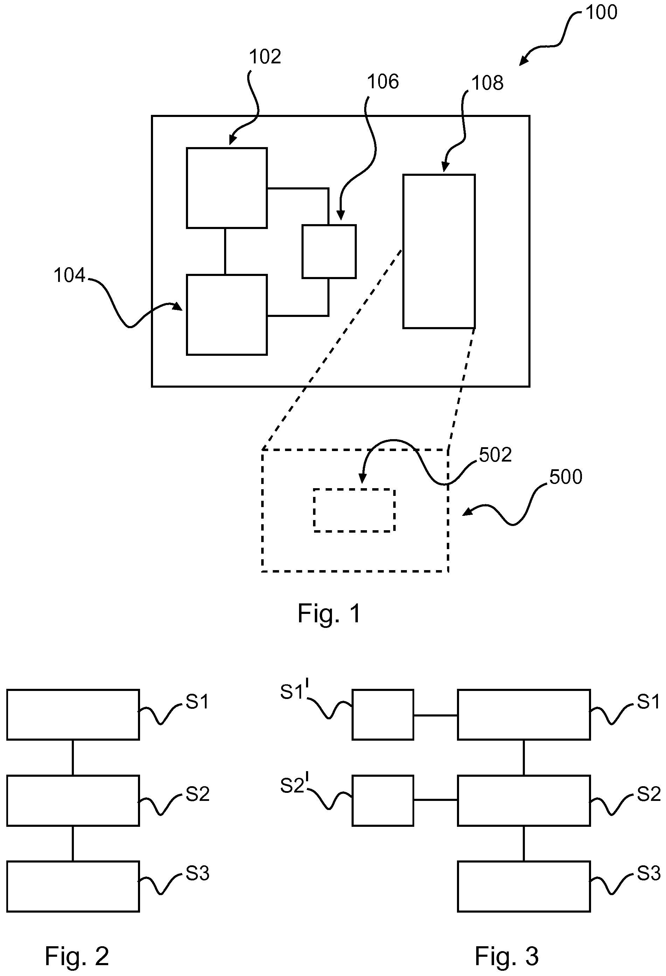

Figure 1 shows an apparatus 100 for selecting at least one component 502 of an industrial drive system 500 according to an exemplary embodiment, wherein the drive system 500 is shown in dashed lines for illustrative purposes.

The at least one component 502 of the industrial drive system 500 can be, for example, a drive, a motor, a load, a transformer, a gearbox, a pump, a ventilation device, a heating device, an air conditioning device, a controller, a motion control, a machinery and/or any other component 502 of the drive system 500.

The apparatus 100 comprises an AI module 102, which is trained according to the method as described hereabove and hereinbelow, e.g. with reference to Figures 2 and/or 3.

Further, the AI module 102 and/or the apparatus 100 comprises a data storage 104 and one or more processors 106 for processing data stored on the data storage 104. For instance, an initial training data set, a modified training data set, simulation data, empiric data, operational data, other data may be stored on the data storage 104, as will be described in more detail with reference to Figures 2 and/or 3.

Further, the apparatus 100 comprise a user interface 108 configured to receive at least on user input put by a user. The user input may be indicative of at least one usage requirement for the drive system 500, e.g. describing an application of the drive system 500 and/or e.g. a constraint, a demand, a requirement and/or a specification of the drive system 500 and/or the at least one component 502 thereof. Based on the user input and/or based on processing the at least one usage requirement, the apparatus 100 and/or the AI module 102 may determine and/or select at least one component 502 of the drive system 500. The selected at least one component 502 may optionally be displayed on the user interface 108, as illustrated by the dashed lines in Figure 1.

Figure 2 shows a flowchart illustrating steps of a method of training an artificial intelligence module 102 according to an exemplary embodiment. Unless otherwise specified, the AI module 102 comprises the same features as the AI module 102 described with reference to Figure 1.

In step S1, an initial training data set is provided on a data storage 104, e.g. a data storage 104 of the apparatus 100 as described with reference to Figure 1. The initial training data set comprises a set of rules, wherein each rule is indicative and/or representative of a selection decision for selecting at least one component 502 of an industrial drive system 500 based on at least one usage requirement for the industrial drive system 500.

The initial training data set may e.g. be stored on the data storage 104 of the apparatus 100. Optionally, the initial training data set may be retrieved, collected and/or read from the data storage 104 by the AI module 102 and/or processed with the processor 106. For example, each rule of the rule set of the initial training data set may comprise at least one pair of data entries with a first data element indicative of the at least one usage requirement and a second data element indicative of the at least one component 502 of the industrial drive system 500 fulfilling the at least one usage requirement.

In step S2, a modified training data set is generated based on supplementing the initial training data set with at least one further selection decision for selecting the at least one component 502 of the drive system 500 based on at least one of simulation data relating to a simulation of at least a part of the drive system 500, empiric data relating to a selection of the at least one component 502 by one or more experts, and operational data indicative of at least one operational characteristic of at least one installed industrial drive system 500.

The simulation data, the empiric data and/or the operational data may e.g. be stored on the data storage 104 of the apparatus 100. Optionally, the simulation data, the empiric data and/or the operational data may be retrieved, collected and/or read from the data storage 104 by the AI module 102 and/or processed with the processor 106 in step S2. Further, the modified training data set may be stored on the data storage 104 in step S2.

In step S3, the AI module 102 is trained based on the modified training data set generated in step S2. Therein, a machine learning algorithm may be utilized to process the initial training data set and/or the modified training data set, e.g. for determining one or more weights of the AI module 102.

Figure 3 shows a flow chart illustrating steps of a method of training an artificial intelligence module 102 according to an exemplary embodiment. Therein, steps S1 to S3 are analogue and/or identical to steps S1 to S3 described with reference to Figure 2. However, Figure 3 shows various optional steps that can be performed in addition to steps S1 to S3 in an arbitrary sequence, order and/or combination.

In an optional step S1' the initial training data set is generated using a software tool for deterministically selecting one or more components 502 of the industrial drive system 500 based on one or more usage requirements for the industrial drive system 500. Therein, step S1' can be performed before step S1 and/or step S1' can be performed in addition to step S1 as described with reference to Figure 2.

For instance, the initial training data set can be created from e.g. an existing software tool for component selection as used in early phases of drive system engineering, e.g. during sales. The initial training data set can be derived and/or determined based on the software tool. Using a computationally inexpensive expert system or software tool, a large initial training data set can be provided to the AI module 102 and/or the machine learning algorithm employed therein.

Further in a step S2', the further selection decision may be derived from one or more of the simulation data, the empiric data and the operational data. Therein, step S2' can be performed before step S2 and/or in addition to step S2 as described with reference to Figure 2.

In step S2', the initial training data set may be updated, corrected and/or augmented, e.g. continuously, based on the simulation data, the empiric data and/or the operational data.

For example, the further selection decision may be derived in step S2' from the empiric data that represent selections done by a human expert, based e.g. on experience or gained using simulation tools. The further selection decision can then augment, adjust, alter, modify, replace and/or override one or more rules of the rule set of the initial training data set, thereby generating the modified training data set. The empiric data can comprise decisions made in all phases of the drive systems lifecycle.

Alternatively or additionally, the further selection decision may be derived in step S2' from the simulation data representing simulations of the drive system 500, e.g. of thermal, mechanical and/or electrical aspects of the system 500. The further selection decision can then augment, adjust, alter, modify, replace and/or override one or more rules of the rule set of the initial training data set, thereby generating the modified training data set, preferably without a human expert.

Alternatively or additionally, the further selection decision may be derived in step S2' from the operational data representing operational characteristics of one or more installed drive systems. The further selection decision can then augment, adjust, alter, modify, replace and/or override one or more rules of the rule set of the initial training data set, thereby generating the modified training data set.

Optionally, in step S2 and/or in step S2' at least a part of the simulation data, the empiric data and/or the operational data can be weighted differently with respect to each other and/or with respect to one or more rules of the rule set of the initial training data set. Further, in step S2 and/or in step S2' at least one further selection decisions may be derived from each of the simulation data, the empiric data and the operation data, wherein different weights and/or weighting factors may be applied to the further selection decisions. For example, the weighting factors may be chosen such that an update of the initial training data set based on the empiric data may override a number of similar samples from other sources or samples of a certain similarity.

Optionally, in step S2 and/or in step S2' at least one rule of the rule set of the initial training data set may be adjusted, modified and/or replaced based on the at least one further selection decision, thereby generating the modified training data set.

Optionally, an inappropriate selection decision can be determined in step S2' based one or more of the simulation data, the empiric data and the operational data, and the further selection decision may be selected taking the inappropriate selection decision into account. By way of example, operational data may indicate that a first component associated with the inappropriate selection decision, e.g. as defined in one or more rules of the rule set, may lead to a high temperature of an installed system. Based on this information, it may be determined that a cooling system with a specific cooling capability should be used for the drive system and a corresponding further selection can be determined based on any of the simulation data, the empiric data and the operational data. Further, one or more rules of the rule set, e.g. a plurality of rules at close distance in the feature space, may then be adjusted, replaced, removed and/or modified based on the further selection decision.

Using steps of the method as described above, the AI module 102 and/or a machine learning algorithm for the component selection can be continually retrained with an updated training data set and/or based on repeatedly generating modified training data sets.

In a variant of the method, active learning techniques may be used to request more expensive training data samples and/or data elements from e.g. computationally expensive simulation experiments, such as simulation data. Such data may then be used to update the initial training data set and/or to generate the modified training data set.

Further, a machine learning algorithm for engineering decisions other than component selection, e.g. for a selection of at least one drive system configuration parameter can be trained in addition.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims.

## Claims

1. A computer-implemented method of training an artificial intelligence module (102), AI module, for selecting at least one component (502) of an industrial drive system (500), the method comprising the steps of:
providing (S1), on a data storage, an initial training data set comprising a set of rules, wherein each rule is indicative of a selection decision for selecting at least one component (502) of the industrial drive system (500) based on at least one usage requirement for the industrial drive system (500);
generating (S2) a modified training data set based on supplementing the initial training data set with at least one further selection decision for selecting the at least one component (502) of the drive system (500) based on at least one of simulation data relating to a simulation of at least a part of the drive system, empiric data relating to a selection of the at least one component, and operational data indicative of at least one operational characteristic of at least one installed industrial drive system; and
training (S3) the AI module (102) based on the modified training data set, wherein the AI module (102) is configured to provide, as an output, the at least one component (502) of the industrial drive system (500) based on the at least one usage requirement, that is provided to the trained AI module (102) as an input, wherein the industrial drive system (500) is to operate with the selected at least one component (502).

2. The method according to claim 1, wherein providing the initial training data set comprises:
generating the initial training data set using a software tool for deterministically selecting one or more components (502) of the industrial drive system (500) based on one or more usage requirements for the industrial drive system (500).

3. The method according to any of the preceding claims,
wherein each rule of the rule set of the initial training data set comprises at least one pair of data entries with a first data element indicative of the at least one usage requirement and a second data element indicative of the at least one component (502) of the industrial drive system (500) fulfilling the at least one usage requirement.

4. The method according to any of the preceding claims,
wherein the at least one component (502) of the industrial drive system (500) is at least one of a drive, a motor, a load, a transformer, a gearbox, a pump, a ventilation device, a heating device, an air conditioning device, a controller, a motion control, and a machinery of the drive system.

5. The method according to any of the preceding claims,
wherein the at least one usage requirement for the industrial drive system (500) is indicative of a specification of at least one of a drive, a motor, a load, a transformer, a gearbox, a pump, a ventilation device, a heating device, an air conditioning device, a controller, a motion control, and a machinery of the drive system.

6. The method according to any of the preceding claims, further comprising:
weighting the at least one further selection decision for selecting the at least one component (502) of the industrial drive system (500) relative to one or more rules of the set of rules of the initial training data set.

7. The method according to any of the preceding claims, further comprising:
weighting at least a part of the simulation data, the empiric data and the operational data with at least partly differing weights and/or weighting factors.

8. The method according to any of the preceding claims, wherein supplementing the initial training data set comprises:
adjusting at least one rule of the rule set of the initial training data set based on the at least one further selection decision; and/or
adjusting at least one rule of the rule set of the initial training data set based on at least one of the simulation data, the empiric data, and the operational data.

9. The method according to any of the preceding claims, wherein supplementing the initial training data set comprises:
replacing at least one rule of the rule set of the initial training data set based on the at least one further selection decision and/or based on at least one of the simulation data, the empiric data, and the operational data.

10. The method according to any of the proceeding claims, wherein supplementing the initial training data set comprises:
deriving the at least one further selection decision from at least one of the simulation data, the empiric data, and the operational data.

11. The method according to any of the preceding claims,
wherein the operational data comprise at least one of maintenance data indicative of a maintenance procedure performed on the at least one installed drive system, sensor data of at least one senor of the at least one installed drive system, disturbance data indicative of a disturbance of the at least one installed drive system, time series data indicative of a temporal development of the at least one installed drive system, and operator data indicative of at least one operator action performed on the at least one installed drive system.

12. The method according to any of the preceding claims, wherein supplementing the initial training data set comprises:
identifying an inappropriate selection decision for selecting the at least one component (502) of the industrial drive system (500) based on at least one of the simulation data, the empiric data, and the operational data; and
selecting the at least one further selection decision taking into account the identified inappropriate selection decision.

13. The method according to any of the preceding claims, further comprising:
generating the simulation data to supplement the initial training data set.

14. Use of an artificial intelligence module (102), AI module, trained according to the method of any of the preceding claims, for selecting at least one component (502) of an industrial drive system (500) and providing, as an output, the at least one component (502) of the industrial drive system (500) based on the at least one usage requirement, that is provided to the trained AI module (102) as an input, wherein the industrial drive system (500) is to operate with the selected at least one component (502).

15. An apparatus (100) for selecting at least one component (502) of an industrial drive system (500), the apparatus (100) comprising:
an artificial intelligence module (102), AI module, wherein the AI module (102) is trained according to the method of any of claims 1 to 12, wherein the AI module (102) is configured to provide, as an output, the at least one component (502) of the industrial drive system (500) based on the at least one usage requirement, that is provided to the trained AI module (102) as an input, wherein the industrial drive system (500) is to operate with the selected at least one component (502).

## Patentansprüche

1. Computerimplementiertes Verfahren zum Trainieren eines Moduls für künstliche Intelligenz (102), KI-Modul, zur Auswahl mindestens einer Komponente (502) eines industriellen Antriebssystems (500), wobei das Verfahren die folgenden Schritte umfasst:
Bereitstellen (S1) eines initialen Trainingsdatensatzes auf einem Datenspeicher, wobei der initiale Trainingsdatensatz eine Menge von Regeln umfasst, wobei jede Regel indikativ für eine Auswahlentscheidung zur Auswahl von mindestens einer Komponente (502) des industriellen Antriebssystems (500) basierend auf mindestens einer Nutzungsanforderung für das industrielle Antriebssystem (500) ist;
Erzeugen (S2) eines modifizierten Trainingsdatensatzes, indem der initiale Trainingsdatensatz mit mindestens einer weiteren Auswahlentscheidung zur Auswahl der mindestens einen Komponente (502) des Antriebssystems (500) ergänzt wird, basierend auf mindestens einem der folgenden, Simulationsdaten, die sich auf eine Simulation von mindestens einem Teil des Antriebssystems beziehen, empirische Daten, die sich auf eine Auswahl der mindestens einen Komponente beziehen, und Betriebsdaten, die indikativ für mindestens ein Betriebsmerkmal von mindestens einem installierten industriellen Antriebssystem sind; und
Trainieren (S3) des KI-Moduls (102) basierend auf dem modifizierten Trainingsdatensatz, wobei das KI-Modul (102) so eingerichtet ist, dass es als Ausgabe die mindestens eine Komponente (502) des industriellen Antriebssystems (500) basierend auf der mindestens einen Nutzungsanforderung bereitstellt, die dem trainierten KI-Modul (102) als Eingabe bereitgestellt wird, wobei das industrielle Antriebssystem (500) mit der ausgewählten mindestens einen Komponente (502) betrieben werden soll.

2. Verfahren nach Anspruch 1, wobei die Bereitstellung des initialen Trainingsdatensatzes umfasst:
Erzeugen des initialen Trainingsdatensatzes unter Verwendung eines Softwaretools zur deterministischen Auswahl einer oder mehrerer Komponenten (502) des industriellen Antriebssystems (500) basierend auf einer oder mehreren Nutzungsanforderungen für das industrielle Antriebssystem (500).

3. Verfahren nach einem der vorhergehenden Ansprüche,
wobei jede Regel der Regelmenge des initialen Trainingsdatensatzes mindestens ein Datenpaar umfasst, wobei ein erstes Datenelement indikativ für die mindestens eine Nutzungsanforderung ist und ein zweites Datenelement indikativ für die mindestens eine Komponente (502) des industriellen Antriebssystems (500) ist, die die mindestens eine Nutzungsanforderung erfüllt.

4. Verfahren nach einem der vorhergehenden Ansprüche,
wobei die mindestens eine Komponente (502) des industriellen Antriebssystems (500) mindestens eine der folgenden ist, ein Antrieb, ein Motor, eine Last, ein Transformator, ein Getriebe, eine Pumpe, eine Belüftungseinrichtung, eine Heizeinrichtung, eine Klimaanlage, ein Regler, eine Bewegungssteuerung und eine Maschine des Antriebssystems.

5. Verfahren nach einem der vorhergehenden Ansprüche,
wobei die mindestens eine Nutzungsanforderung für das industrielle Antriebssystem (500) indikativ für eine Spezifikation von mindestens einem der folgenden ist, ein Antrieb, ein Motor, eine Last, ein Transformator, ein Getriebe, eine Pumpe, eine Belüftungseinrichtung, eine Heizeinrichtung, eine Klimaanlage, ein Regler, eine Bewegungssteuerung und eine Maschine des Antriebssystems.

6. Verfahren nach einem der vorhergehenden Ansprüche, weiterhin umfassend: Gewichten der mindestens einen weiteren Auswahlentscheidung zur Auswahl der mindestens einen Komponente (502) des industriellen Antriebssystems (500) relativ zu einer oder mehreren Regeln der Regelmenge des initialen Trainingsdatensatzes.

7. Verfahren nach einem der vorhergehenden Ansprüche, weiterhin umfassend: Gewichten von mindestens einem Teil der Simulationsdaten, der empirischen Daten und der Betriebsdaten mit zumindest teilweise unterschiedlichen Gewichten und/oder Gewichtungsfaktoren.

8. Verfahren nach einem der vorhergehenden Ansprüche, wobei das Ergänzen des initialen Trainingsdatensatzes umfasst:
Anpassen von mindestens einer Regel der Regelmenge des initialen Trainingsdatensatzes basierend auf der mindestens einen weiteren Auswahlentscheidung; und/oder
Anpassen von mindestens einer Regel der Regelmenge des initialen Trainingsdatensatzes basierend auf mindestens einem der folgenden: den Simulationsdaten, den empirischen Daten und den Betriebsdaten.

9. Verfahren nach einem der vorhergehenden Ansprüche, wobei das Ergänzen des initialen Trainingsdatensatzes umfasst:
Ersetzen von mindestens einer Regel der Regelmenge des initialen Trainingsdatensatzes basierend auf der mindestens einen weiteren Auswahlentscheidung und/oder basierend auf mindestens einem der folgenden, den Simulationsdaten, den empirischen Daten und den Betriebsdaten.

10. Verfahren nach einem der vorhergehenden Ansprüche, wobei das Ergänzen des initialen Trainingsdatensatzes umfasst:
Ableiten der mindestens einen weiteren Auswahlentscheidung aus mindestens einem der folgenden, den Simulationsdaten, den empirischen Daten und den Betriebsdaten.

11. Verfahren nach einem der vorhergehenden Ansprüche,
wobei die Betriebsdaten mindestens eines der folgenden umfassen, Wartungsdaten, die indikativ für eine an dem mindestens einen installierten Antriebssystem durchgeführte Wartungsmaßnahme sind, Sensordaten von mindestens einem Sensor des mindestens einen installierten Antriebssystems, Störungsdaten, die indikativ für eine Störung des mindestens einen installierten Antriebssystems sind, Zeitreihendaten, die indikativ für eine zeitliche Entwicklung des mindestens einen installierten Antriebssystems sind, und Bedienerdaten, die indikativ für mindestens eine an dem mindestens einen installierten Antriebssystem durchgeführte Bedieneraktion sind.

12. Verfahren nach einem der vorhergehenden Ansprüche, wobei das Ergänzen des initialen Trainingsdatensatzes umfasst:
Identifizieren einer ungeeigneten Auswahlentscheidung zur Auswahl der mindestens einen Komponente (502) des industriellen Antriebssystems (500) basierend auf mindestens einem der folgenden, den Simulationsdaten, den empirischen Daten und den Betriebsdaten; und
Auswählen der mindestens einen weiteren Auswahlentscheidung unter Berücksichtigung der identifizierten ungeeigneten Auswahlentscheidung.

13. Verfahren nach einem der vorhergehenden Ansprüche, weiterhin umfassend:
Erzeugen der Simulationsdaten zur Ergänzung des initialen Trainingsdatensatzes.

14. Verwendung eines nach einem der vorhergehenden Ansprüche trainierten Moduls für künstliche Intelligenz (102), KI-Modul (102), zur Auswahl mindestens einer Komponente (502) eines industriellen Antriebssystems (500) und zur Bereitstellung der mindestens einen Komponente (502) des industriellen Antriebssystems (500) als Ausgabe, basierend auf der mindestens einen Nutzungsanforderung, die dem trainierten KI-Modul (102) als Eingabe bereitgestellt wird, wobei das industrielle Antriebssystem (500) mit der ausgewählten mindestens einen Komponente (502) betrieben werden soll.

15. Vorrichtung (100) zur Auswahl mindestens einer Komponente (502) eines industriellen Antriebssystems (500), wobei die Vorrichtung (100) umfasst:
ein Modul für künstliche Intelligenz (102), KI-Modul, wobei das KI-Modul (102) gemäß dem Verfahren nach einem der Ansprüche 1 bis 12 trainiert wird, wobei das KI-Modul (102) so eingerichtet ist, dass es als eine Ausgabe die mindestens eine Komponente (502) des industriellen Antriebssystems (500) auf der Grundlage der mindestens einen Nutzungsanforderung bereitstellt, die dem trainierten KI-Modul (102) als eine Eingabe bereitgestellt wird, wobei das industrielle Antriebssystem (500) mit der ausgewählten mindestens einen Komponente (502) zu betreiben ist.

## Revendications

1. Procédé, mis en œuvre par ordinateur, d'entraînement d'un module d'intelligence artificielle, noté module IA, (102) pour la sélection d'au moins un composant (502) d'un système d'actionnement industriel (500), le procédé comprenant les étapes suivantes :
la fourniture (S1), sur un support de stockage de données, d'un ensemble de données d'entraînement initial comprenant un ensemble de règles, chaque règle indiquant une décision de sélection pour la sélection d'au moins un composant (502) du système d'actionnement industriel (500) sur la base d'au moins une exigence d'utilisation pour le système d'actionnement industriel (500) ;
la génération (S2) d'un ensemble de données d'entraînement modifié par enrichissement de l'ensemble de données d'entraînement initial au moyen d'au moins une décision de sélection supplémentaire pour la sélection de l'au moins un composant (502) du système d'actionnement (500) sur la base de données de simulation relatives à une simulation d'au moins une partie du système d'actionnement et/ou de données empiriques relatives à une sélection de l'au moins un composant et/ou de données de fonctionnement indiquant au moins une caractéristique de fonctionnement d'au moins un système d'actionnement industriel installé ; et
l'entraînement (S3) du module IA (102) sur la base de l'ensemble de données d'entraînement modifié, le module IA (102) étant configuré pour fournir, en sortie, l'au moins un composant (502) du système d'actionnement industriel (500) sur la base de l'au moins une exigence d'utilisation, qui est fournie en entrée au module IA (102) entraîné, le système d'actionnement industriel (500) étant destiné à fonctionner avec l'au moins un composant (502) sélectionné.

2. Procédé selon la revendication 1, dans lequel la fourniture de l'ensemble de données d'entraînement initial comprend :
la génération de l'ensemble de données d'entraînement initial au moyen d'un outil logiciel permettant la sélection déterministe d'un ou de plusieurs composants (502) du système d'actionnement industriel (500) sur la base d'une ou de plusieurs exigences d'utilisation pour le système d'actionnement industriel (500).

3. Procédé selon l'une quelconque des revendications précédentes,
dans lequel chaque règle de l'ensemble de règles de l'ensemble de données d'entraînement initial comprend au moins une paire d'entrées de données avec un premier élément de données indiquant au moins une exigence d'utilisation et un deuxième élément de données indiquant l'au moins un composant (502) du système d'actionnement industriel (500) satisfaisant à l'au moins une exigence d'utilisation.

4. Procédé selon l'une quelconque des revendications précédentes,
dans lequel l'au moins un composant (502) du système d'actionnement industriel (500) est au moins un élément parmi un actionneur, un moteur, une charge, un transformateur, une boîte de vitesses, une pompe, un dispositif de ventilation, un dispositif de chauffage, un dispositif de climatisation, un contrôleur, une commande de mouvement, et une machine du système d'actionnement.

5. Procédé selon l'une quelconque des revendications précédentes,
dans lequel l'au moins une exigence d'utilisation pour le système d'actionnement industriel (500) indique une spécification d'au moins un élément parmi un actionneur, un moteur, une charge, un transformateur, une boîte de vitesses, une pompe, un dispositif de ventilation, un dispositif de chauffage, un dispositif de climatisation, un contrôleur, une commande de mouvement, et une machine du système d'actionnement.

6. Procédé selon l'une quelconque des revendications précédentes, comprenant en outre :
la pondération de l'au moins une décision de sélection supplémentaire pour la sélection de l'au moins un composant (502) du système d'actionnement industriel (500) par rapport à une ou plusieurs règles de l'ensemble de règles de l'ensemble de données d'entraînement initial.

7. Procédé selon l'une quelconque des revendications précédentes, comprenant en outre :
la pondération d'au moins une partie des données de simulation, des données empiriques et des données de fonctionnement avec des poids et/ou des facteurs de pondération au moins partiellement différents.

8. Procédé selon l'une quelconque des revendications précédentes, dans lequel l'enrichissement de l'ensemble de données d'entraînement initial comprend :
l'ajustement d'au moins une règle de l'ensemble de règles de l'ensemble de données d'entraînement initial sur la base de l'au moins une décision de sélection supplémentaire ; et/ou
l'ajustement d'au moins une règle de l'ensemble de règles de l'ensemble de données d'entraînement initial sur la base des données de simulation et/ou des données empiriques et/ou des données de fonctionnement.

9. Procédé selon l'une quelconque des revendications précédentes, dans lequel l'enrichissement de l'ensemble de données d'entraînement initial comprend :
le remplacement d'au moins une règle de l'ensemble de règles de l'ensemble de données d'entraînement initial sur la base de l'au moins une décision de sélection supplémentaire et/ou sur la base des données de simulation et/ou des données empiriques et/ou des données de fonctionnement.

10. Procédé selon l'une quelconque des revendications précédentes, dans lequel l'enrichissement de l'ensemble de données d'entraînement initial comprend :
la dérivation de l'au moins une décision de sélection supplémentaire à partir des données de simulation et/ou des données empiriques et/ou des données de fonctionnement.

11. Procédé selon l'une quelconque des revendications précédentes,
dans lequel les données de fonctionnement comprennent des données de maintenance indiquant une procédure de maintenance réalisée sur l'au moins un système d'actionnement installé et/ou des données de capteur d'au moins un capteur de l'au moins un système d'actionnement installé et/ou des données de perturbation indiquant une perturbation de l'au moins un système d'actionnement installé et/ou des données en série temporelle indiquant une évolution temporelle de l'au moins un système d'actionnement installé et/ou des données d'opérateur indiquant au moins une action de l'opérateur réalisée sur l'au moins un système d'actionnement installé.

12. Procédé selon l'une quelconque des revendications précédentes, dans lequel l'enrichissement de l'ensemble de données d'entraînement initial comprend :
l'identification d'une décision de sélection inappropriée pour la sélection de l'au moins un composant (502) du système d'actionnement industriel (500) sur la base des données de simulation et/ou des données empiriques et/ou des données de fonctionnement ; et
la sélection de l'au moins une décision de sélection supplémentaire compte tenu de la décision de sélection inappropriée identifiée.

13. Procédé selon l'une quelconque des revendications précédentes, comprenant en outre :
la génération des données de simulation pour enrichir l'ensemble de données d'entraînement initial.

14. Utilisation d'un module d'intelligence artificielle, noté module IA, (102) entraîné conformément au procédé selon l'une quelconque des revendications précédentes, pour la sélection d'au moins un composant (502) d'un système d'actionnement industriel (500) et la fourniture, en sortie, de l'au moins un composant (502) du système d'actionnement industriel (500) sur la base de l'au moins une exigence d'utilisation, qui est fournie en entrée au module IA (102) entraîné, le système d'actionnement industriel (500) étant destiné à fonctionner avec l'au moins un composant (502) sélectionné.

15. Appareil (100) de sélection d'au moins un composant (502) d'un système d'actionnement industriel (500), l'appareil (100) comprenant :
un module d'intelligence artificielle, noté module IA (102), le module IA (102) étant entraîné conformément au procédé selon l'une quelconque des revendications 1 à 12, le module IA (102) étant configuré pour fournir, en sortie, l'au moins un composant (502) du système d'actionnement industriel (500) sur la base de l'au moins une exigence d'utilisation, qui est fournie en entrée au module IA (102) entraîné, le système d'actionnement industriel (500) étant destiné à fonctionner avec l'au moins un composant (502) sélectionné.
